# FASCICULE DE BREVET EUROPEEN

(11) **EP 0 559 562 B1**
(45) Date de publication et mention de la délivrance du brevet: **30.08.1995**
(21) Numéro de dépôt: 93400553.9
(22) Date de dépôt: 03.03.1993
(51) Int. Cl.: F16D 66/02

(54) **Dispositif de détection d'usure de garnitures de friction**
Vorrichtung zur Verschleissanzeige von Reibbelägen
Device for detecting wear of friction lining

(30) Priorité: 03.03.1992 FR 9202509
(43) Date de publication de la demande: 08.09.1993
(73) Titulaire: COMPAGNIE PLASTIC OMNIUM Société Anonyme dite:, 69007 Lyon (FR)
(72) Inventeur: Schosseler, René, F-95100 Argenteuil (FR); Bartocci, Marcel, F-52200 Langres (FR)
(74) Mandataire: Leszczynski, André

(56) Documents cités:
- DE-A- 2 030 966
- FR-A- 2 507 722
- GB-A- 2 149 034

## Description

La présente invention est relative à un dispositif de détection d'usure de garnitures de friction, notamment de garnitures de plaquettes de frein.

Dans de nombreux domaines techniques, notamment pour la réalisation de systèmes de freinage de véhicules, on utilise des garnitures de friction qui sont destinées à venir au contact de pièces en mouvement pour en réduire la vitesse par frottement.

Par exemple, pour réaliser un frein à disque sur une roue de voiture, on dispose deux plaquettes de freins de part et d'autre d'un disque solidaire de cette roue, plaquettes qui sont susceptibles, lors du freinage, d'être comprimées sur celui-ci pour diminuer sa vitesse de rotation par frottement.

Bien entendu, ce fonctionnement s'accompagne de l'usure des plaquettes et il est nécessaire de remplacer ces dernières dès que l'épaisseur de leur garniture devient trop faible.

Pour détecter l'usure des garnitures de friction, on connaît des dispositifs de détection d'usure qui, reliés à un circuit électrique, permettent de signaler le moment à partir duquel il s'avère nécessaire de procéder au remplacement des plaquettes.

Selon un procédé connu pour réaliser de tels dispositifs, on forme dans une paroi latérale d'une garniture de friction, un trou, d'axe sensiblement parallèle à la surface d'usure de la garniture, et l'on insère dans ce trou l'extrémité d'un conducteur électrique gainé que l'on maintient en position par collage.

De cette manière, le disque qui frotte sur la plaquette arrive nécessairement au contact de l'âme conductrice du fil au bout d'un certain temps d'utilisation. Ce contact ferme un circuit électrique, ce qui déclenche un signal indicateur de l'usure des plaquettes.

Un tel dispositif présente cependant l'inconvénient majeur qu'il est d'une fiabilité limitée dans la mesure où la gaine du fil inséré dans la plaquette est elle-même vulnérable aux intempéries, aux échauffements très importants subis par la garniture et aux déformations internes de l'âme de son fil conducteur électrique soumise à d'importantes variations de températures.

Le fil conducteur doit comporter une gaine qui soit à la fois étanche à l'eau, résistante à la traction et capable de supporter d'importantes élévations de température. La réunion de ces trois propriétés est un problème délicat, les produits étanches à l'eau qui supportent des températures élevées n'étant généralement pas résistants à la traction.

De brutales manipulations du dispositif ou des conditions d'utilisation rigoureuses peuvent cependant conduire à des tractions importantes et à la détérioration du fil.

La détérioration du fil peut avoir pour conséquence la génération de parasites électriques qui gênent en particulier le fonctionnement des autoradios.

On connaît par GB-A-2 149 034 un dispositif de détection d'usure de garnitures de friction, notamment de garnitures de plaquettes de freins, du type comportant un fil conducteur électrique gainé inséré dans un trou réalisé dans une paroi latérale d'une garniture, l'extrémité du fil conducteur électrique étant recouverte d'un capuchon électriquement isolant, réalisé en matière plastique ou en caoutchouc. Du fait des températures élevées d'utilisation et pour éviter une dégradation rapide du capuchon, on est amené à réaliser des capuchons à paroi épaisse, ce qui nuit à la précision de la détection.

La présente invention vise à proposer un dispositif de détection d'usure de garnitures de friction qui résoud les inconvénients mentionnés ci-dessus, tout en étant fiable et durable, et de mise en oeuvre simple et économique.

La présente invention a pour objet un dispositif de détection d'usure de garnitures de friction, notamment de garnitures de plaquettes de freins, du type comportant un fil conducteur électrique gainé inséré dans un trou réalisé dans une paroi latérale d'une garniture, l'extrémité du fil conducteur électrique étant recouverte d'un capuchon électriquement isolant, caractérisé par le fait que le capuchon est réalisé en un polymère à cristaux liquides.

Le dispositif de détection d'usure réalisé selon l'invention se révèle d'une plus grande fiabilité que ceux obtenus par la mise en oeuvre des procédés connus.

En effet, selon l'invention, l'extrémité du fil conducteur se trouve parfaitement isolée, évitant tout contact électrique intempestif entre son âme conductrice et l'extérieur qui serait susceptible d'engendrer par exemple des parasites dans les autoradios.

Selon l'invention, le capuchon est électriquement isolant et étanche à l'eau dans tout le domaine de température d'utilisation de la garniture, et mécaniquement résistant aux efforts résultant des dilatations de l'âme du fil conducteur électrique également soumise à des variations de températures.

Le capuchon électriquement isolant remplit les deux fonctions suivantes.

En premier lieu, il réalise l'isolation de l'extrémité du fil conducteur électrique introduite dans la garniture.

En second lieu, il maintient en position l'âme de ce conducteur électrique, en s'opposant à son retrait, qui résulte des variations de longueurs qu'elle subit sous l'effet des variations de températures.

Avantageusement, le capuchon est réalisé en un polymère à cristaux liquides connu sous le nom de Vectra commercialisé par la Société Hoechst.

D'autres polymères à cristaux liquides peuvent également être utilisés, notamment celui connu sous le nom de Xydar de la Société Amoco, ou encore celui connu sous le nom de Victrex SRP de la Société Ici.

Un tel polymère à cristaux liquides est particulièrement avantageux en raison de ses qualités d'isolant, de sa capacité à supporter des températures d'utilisation en continu de l'ordre de 320°C et de sa grande résistance mécanique aux chocs.

De plus, ce polymère permet de réaliser un capuchon de très faible épaisseur, que l'on peut placer dans la garniture de friction à proximité de sa plaque-support.

Selon une première variante, le capuchon est maintenu en place par collage.

Selon une seconde variante, le capuchon est surmoulé directement sur l'extrémité du fil conducteur électrique.

Dans le but de mieux faire comprendre l'invention, on va en décrire maitenant deux mode de réalisation donnés à titre d'exemple et sans aucun caractère limitatif en référence au dessin schématique annexé dans lequel :
- la figure 1 représente une vue en perspective d'un mode de réalisation de l'invention,
- la figure 2 est une vue en coupe selon II-II de la figure 1,

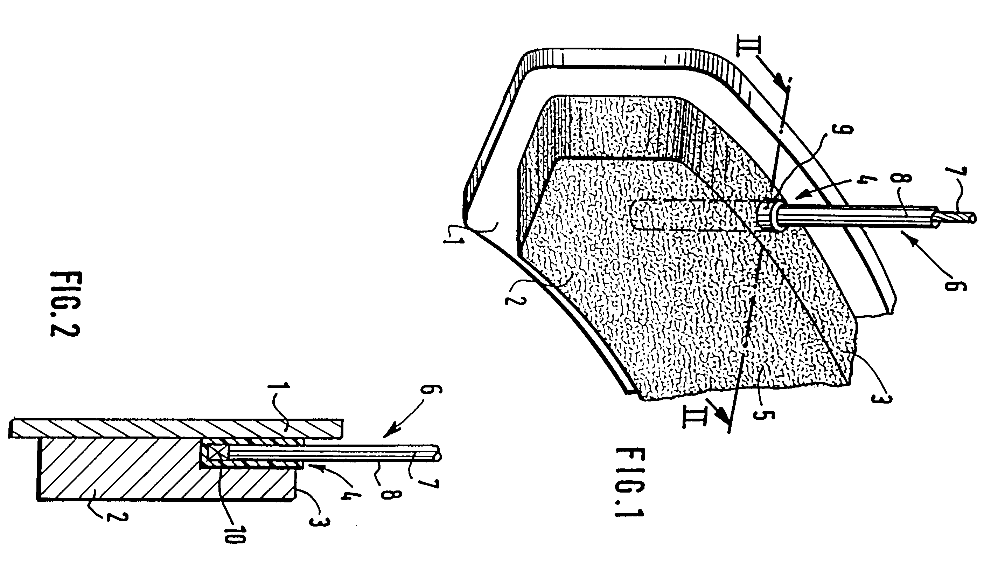

Sur la figure 1, une plaque support 1 et une garniture de friction 2 solidaire de cette plaque-support constituent un ensemble du type plaquette de freins à disques.

Sur une paroi latérale 3 de la garniture 2, un trou 4 a été réalisé de sorte que son axe soit sensiblement parallèle à la surface d'usure 5 de la garniture 2.

Conformément à l'invention, un fil conducteur électrique gainé 6 comportant une âme conductrice 7 et une gaine en matière plastique isolante 8 est introduit dans le trou latéral 4, son extrémité étant obturée à l'aide d'un moyen de bouchage.

Dans le mode de réalisation représenté ici, le moyen de bouchage est constitué par un capuchon 9 électriquement isolant et étanche à l'eau dans tout le domaine de température d'utilisation de la garniture.

En outre, ce capuchon 9 est mécaniquement résistant aux efforts résultant des dilatations de l'âme 7 du fil conducteur électrique 6 soumis à des variations de températures transmises par l'échauffement de la garniture 2 lors du freinage.

Dans le présent mode de réalisation, le capuchon 9 est réalisé en polymère à cristaux liquides connu sous le nom de Vectra.

Un tel capuchon est susceptible de résister à des températures de l'ordre de 250°C pendant plusieurs heures sans subir aucune dégradation.

Des tests ont permis de montrer qu'il est capable de supporter des élévations de températures avoisinant les 300 °C pendant plusieurs minutes et même des températures de l'ordre de 350°C pendant des courtes pointes d'environ 10 à 15 minutes, durées qui correspondent à des durées moyennes de freinage puissant.

Le capuchon 9 est maintenu sur le fil 7 par collage.

A l'extrémité du fil conducteur électrique 6, on a placé un connecteur 10 dont le rôle est de maintenir serrées les fibres métalliques de l'âme 7, afin d'éviter leur effilochage lors de l'introduction du manchon 9 au moment du collage de ce dernier.

Par ailleurs, la gaine 8 du fil conducteur électrique gainé 6 est elle-même susceptible de se détériorer, notamment en raison des variations de températures qu'elle subit et des dilatations de l'âme conductrice 7 qu'elle renferme.

La gaine 8 représentée sur le dessin est composée de fibres de verre revêtues individuellement d'un produit à base de silicone qui sont tressées entre elles pour constituer la gaine 8.

Dans une variante de ce mode de réalisation, la gaine ainsi obtenue est également revêtue dans sa totalité d'un produit à base de silicone.

On peut à cet effet utiliser du silicone pur ou une résine silicone qui peut être composée par exemple de silicone pur et d'un vernis acrylique.

Des tests appliqués sur cette gaine suivant la norme NFR 13 414 et NFR 13 415 ont révélé d'excellentes qualités d'isolant alliées à une bonne tenue à hautes températures ainsi qu'à une résistance mécanique importante, même après plusieurs jours d'immersion dans l'eau ou après chauffage à 250°C pendant quelques heures.

En particulier, on a observé que dans ces conditions de préchauffage et d'immersion dans l'eau, un fil conducteur électrique revêtu d'une telle gaine présente une tension de claquage de l'ordre de 4 KV, valeur qui est quatre fois supérieure à la valeur requise par la norme susmentionnée.

## Revendications

1. Dispositif de détection d'usure de garnitures de friction, notamment de garnitures de plaquettes de freins, du type comportant un fil conducteur électrique gainé inséré dans un trou réalisé dans une paroi latérale d'une garniture, l'extrémité du fil conducteur électrique étant recouverte d'un capuchon électriquement isolant, caractérisé par le fait que le capuchon (9) est réalisé en un polymère à cristaux liquides.

2. Dispositif selon la revendication 1, caractérisé par le fait que le capuchon (9) est maintenu par collage à l'extrémité du fil conducteur électrique gainé (6).

3. Dispositif selon la revendication 1, caractérisé par le fait que le capuchon (9) est réalisé par surmoulage de l'extrémité du fil conducteur électrique gainé (6).

4. Dispositif selon l'une quelconque des revendications 1 à 3, caractérisé par le fait que la gaine (8) du fil conducteur électrique (6) est composée de fibres de verre revêtues individuellement d'un produit à base de silicone, les fibres étant tressées entre elles pour const ituer la gaine.

5. Dispositif selon la revendication 4, caractérisé par le fait que la gaine (8) est également revêtue dans sa totalité d'un produit à base de silicone.

6. Dispositif selon l'une quelconque des revendications 4 et 5, caractérisé par le fait que le produit à base de silicone est du silicone pur ou une résine silicone composée, par exemple, de silicone pur et d'un vernis acrylique.

## Claims

1. Device for detecting wear of friction linings, especially brake-pad linings, of the type including a sheathed electrical conductor wire inserted into a hole made in a side wall of a lining, the end of the electrical conductor wire being covered with an electrically insulating cap, characterized in that the cap (9) is made of a liquid-crystal polymer.

2. Device according to Claim 1, characterized in that the cap (9) is held in place by adhesion to the end of the sheathed electrical conductor wire (6).

3. Device according to Claim 1, characterized in that the cap (9) is produced by overmoulding the end of the sheathed electrical conductor wire (6).

4. Device according to any one of Claims 1 to 3, characterized in that the sheath (8) of the electrical conductor wire (6) is composed of glass fibres that are individually coated with a silicone-based substance, the fibres being braided together to form the sheath.

5. Device according to Claim 4, characterized in that the sheath (8) is also coated in its entirety with a silicone-based substance.

6. Device according to either one of Claims 4 and 5, characterized in that the silicone-based substance is pure silicone or a silicone resin composed of, for example, pure silicone and an acrylic varnish.

## Patentansprüche

1. Vorrichtung zur Verschleißmessung an Reibbelägen, insbesondere von Bremsbacken-Garnituren, mit einer ummantelten, elektrisch leitenden Ader, die in ein Loch in einer Seitenwand der Garnitur eingesteckt ist, wobei das Ende der elektrisch leitenden Ader mit einer elektrisch isolierenden Kappe abgedeckt ist, dadurch gekennzeichnet, daß die Kappe (9) aus einem Flüssigkristall-Polymer hergestellt ist.

2. Vorrichtung nach Anspruch 1, dadurch gekennzeichnet, daß die Kappe (9) durch Klebung am Ende der ummantelten elektrisch leitenden Ader (6) gehalten ist.

3. Vorrichtung nach Anspruch 1, dadurch gekennzeichnet, daß die Kappe (9) an das Ende der ummantelten elektrisch leitenden Ader (6) angeformt ist.

4. Vorrichtung nach einem der Ansprüche 1 bis 3, dadurch gekennzeichnet, daß die Ummantelung (8) der elektrisch leitenden Ader (6) aus Glasfasern aufgebaut ist, die einzeln mit einem Produkt auf Silikonbasis umhüllt sind, wobei die Fasern miteinander verflochten sind, um die Ummantelung zu bilden.

5. Vorrichtung nach Anspruch 4, dadurch gekennzeichnet, daß die Ummantelung (8) auch in ihrer Gesamtheit mit einem Produkt auf Silikonbasis umhüllt ist.

6. Vorrichtung nach Anspruch 4 oder 5, dadurch gekennzeichnet, daß das Produkt auf Silikonbasis reines Silikon oder ein Silikonharz ist, das beispielsweise aus reinem Silikon und einem Acryl-Lack besteht.
